(19) Europäisches Patentamt
European Patent Office
Office européen des brevets

(11) **EP 3 163 784 A1**

(12) **EUROPEAN PATENT APPLICATION**

(43) Date of publication:
**03.05.2017 Bulletin 2017/18**

(21) Application number: **15306724.4**

(22) Date of filing: **29.10.2015**

(51) Int Cl.:
*H04L 5/14* (2006.01)　　*H04L 12/24* (2006.01)
*H04L 1/00* (2006.01)　　*H04L 1/20* (2006.01)
*H04L 27/26* (2006.01)　　*H04L 12/801* (2013.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventors:
• **DUPUIS, Nicolas**
**6041 Gosselies (BE)**

• **DARDENNE, Xavier**
**6041 Gosselies (BE)**

(74) Representative: **ALU Antw Patent Attorneys**
**Intellectual Property and Standards**
**Copernicuslaan 50**
**2018 Antwerp (BE)**

Remarks:
Amended claims in accordance with Rule 137(2) EPC.

(54) **METHOD AND DEVICE FOR CONTROLLING A DIGITAL SUBSCRIBER LINE**

(57)　　Embodiments relate to a method for controlling a Digital Subscriber Line (5), executed by a control device (2), comprising repeating the following steps:
- obtaining (S1) a performance indicator (MTBE[i]) representative of an issue rate on said Digital Subscriber Line (5) and a physical layer bitrate (BR[i]) of said Digital Subscriber Line (5),
- determining (S2) a transport layer throughput (T[i]) of said Digital Subscriber Line (5) in function of said performance indicator and said physical layer bitrate,
- determining (S2) a performance threshold (MTBE_{good}[i]) for said Digital Subscriber Line (5) in function of said physical layer bitrate,
- determining configuration parameters for the Digital Subscriber Line by, depending of a comparison of the performance indicator and the performance threshold:
- decreasing (S6) a noise margin and/or INP level and/or G.INP protection and/or increasing a maximum bitrate of the Digital Subscriber line, or
- increasing (S5) the noise margin and/or INP level and/or G.INP protection and/or decreasing the maximum bitrate of the Digital Subscriber line, wherein the decreased maximum bitrate is equal to or greater than the transport layer throughput,
- controlling the Digital Subscriber Line in function of determined configuration parameters.

FIG. 3

**Description**

FIELD OF THE INVENTION

The present invention relates to the field of telecommunications. In particular, the present invention relates to a method and a device controlling a Digital Subscriber Line.

BACKGROUND

Dynamic Line Management (DLM) is a technique which includes monitoring the line performances and taking actions in order to provide better quality of service. Principle of the known DLM is based on a dynamic assessment and monitoring of the stability of a line in order to take the most suitable action on the PHY parameters in order to guarantee the DSL stability of the line and to provide the line with the highest bitrate performances under this stable condition. By contrast, when a line gets unstable, in order to restore the PHY stability, INP/latency and/or noise margin can be increased. These actions have direct effects on the speed (bitrate) and/or reactivity (latency) of a line. It is therefore important to suitably assess the stability of a line to really improved its quality of service and to avoid any decrease in the quality of experience of the end user (e.g. if a fairly stable line has been classified as unstable, although the end user does not feel any practical impacts on its quality of experience, the DLM will take actions leading to reducing the bitrate and/or lowering the reactivity of the line. At the end, consequences are the decrease of the offered experience. Obviously, in this case, end-user satisfaction is not improved).

To assess the Quality of Service (QoS) of a line, for example to establish if a line is stable or not, metrics and thresholds have been defined from empirical rules. These metrics are the Mean Time Between Errors (MTBE) and the Mean Time Between Resynchronizations (MTBR), capturing respectively the mean time that a line has to wait before its PHY service is being degraded by corrupted symbols, i.e. by PHY symbols containing impacting errors, for example because of impulse noise, and the mean time before the modems resynchronize spontaneously because of weak quality of the link. The MTBE and MTBR are compared with thresholds for determining the stability of the line.

A difficulty resides in the definition of the MTBE thresholds, which should reflect ideally the user impact. Indeed, measurements shows that, with similar error rate (similar MTBE), two lines driven at two different speed (DSL bitrate) are not similarly impacted. In other words, the speed reduction perceived by end-users because of the presence of regular errors (high BER or low MTBE) is, among others, dependent on the bitrate proposed at the PHY-layer (the DSL actual bitrate). It has been proposed to determine these thresholds, taking into account for instance some operator's customer care information (like the presence/amount of user's complains). However, these solutions suffer from bias, as not each end-user complain for the same symptoms, as each impact can be perceived differently and as each customer have their tolerance threshold before complaining to operator's helpdesk.

SUMMARY

It is thus an object of embodiments of the present invention to propose methods and devices for controlling a Digital Subscriber Line, which do not show the inherent shortcomings of the prior art.

Accordingly, embodiments relate to a method for controlling a Digital Subscriber Line, executed by a control device, comprising repeating the following steps:

- obtaining a performance indicator representative of an issue rate on said Digital Subscriber Line and a physical layer bitrate of said Digital Subscriber Line,
- determining a transport layer throughput of said Digital Subscriber Line in function of said performance indicator and said physical layer bitrate,
- determining a performance threshold for said Digital Subscriber Line in function of said physical layer bitrate,
- determining configuration parameters for the Digital Subscriber Line by, depending of a comparison of the performance indicator and the performance threshold:
- decreasing a noise margin and/or INP level and/or G.INP protection and/or increasing a maximum bitrate of the Digital Subscriber line, or
- increasing the noise margin and/or INP level and/or G.INP protection and/or decreasing the maximum bitrate of the Digital Subscriber line, wherein the decreased maximum bitrate is equal to or greater than the transport layer throughput,
- controlling the Digital Subscriber Line in function of determined configuration parameters.

Correspondingly, embodiments relate to a control device for controlling a Digital Subscriber Line, comprising means for repeating the following steps:

- obtaining a performance indicator representative of an issue rate on said Digital Subscriber Line and a physical layer bitrate of said Digital Subscriber Line,
- determining a transport layer throughput of said Digital Subscriber Line in function of said performance indicator and said physical layer bitrate,
- determining a performance threshold for said Digital Subscriber Line in function of said physical layer bitrate,
- determining configuration parameters for the Digital Subscriber Line by, depending of a comparison of the performance indicator and the performance threshold:
- decreasing a noise margin and/or INP level and/or increasing a maximum bitrate of the Digital Subscriber line, or
- increasing the noise margin and/or INP level and/or decreasing the maximum bitrate of the Digital Subscriber line, wherein the decreased maximum bitrate is equal to or greater than the transport layer throughput,
- controlling the Digital Subscriber Line in function of determined configuration parameters.

The performance indicator may be a Mean Time Between Error, determined in function of at least one of an amount of Code Violation, of Errored Seconds and of Severly Errored Seconds.

The method may comprise determining a stability of said Digital Subscriber Line in function of at least said performance indicator and said performance threshold, wherein determining the stability comprises determining that the stability has one of a first value representative of a stable or good state, a second value representative of a risky or intermediate state, and a third value representative of an unstable or degraded state.

The method may comprise repeating said steps until a difference between an actual physical layer bitrate and the increased maximum physical layer bitrate is lower than a granularity threshold.

The method may comprise determining a reference Round Trip Time associated with said Digital Subscriber Line, wherein said transport layer throughput and said performance threshold are determined in function of said reference Round Trip Time.

Method for controlling a plurality of Digital Subscriber Lines, executed by a control device, comprising executing the method mentioned above individually for the respective Digital Subscriber Lines.

Embodiments also relate to a computer program comprising instructions for performing the method mentioned before when said instructions are executed by a computer.

Embodiments also relate to a telecommunication network comprising a control device as mentioned above.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is a bloc diagram of a telecommunication network,
Figure 2 is a graph showing a relationship between TCP-IP throughput and MTBE,
Figure 3 is a flowchart of a method for controlling a Digital Subscriber Line of the telecommunication network of Figure 1,
Figure 4 includes graphs illustrating an example of the functioning of the method of Figure 3,
Figure 5 is a functional view of a control device of the telecommunication network of Figure 1, and
Figure 6 is a structural view of the control device of Figure 4.

DESCRIPTION OF EMBODIMENTS

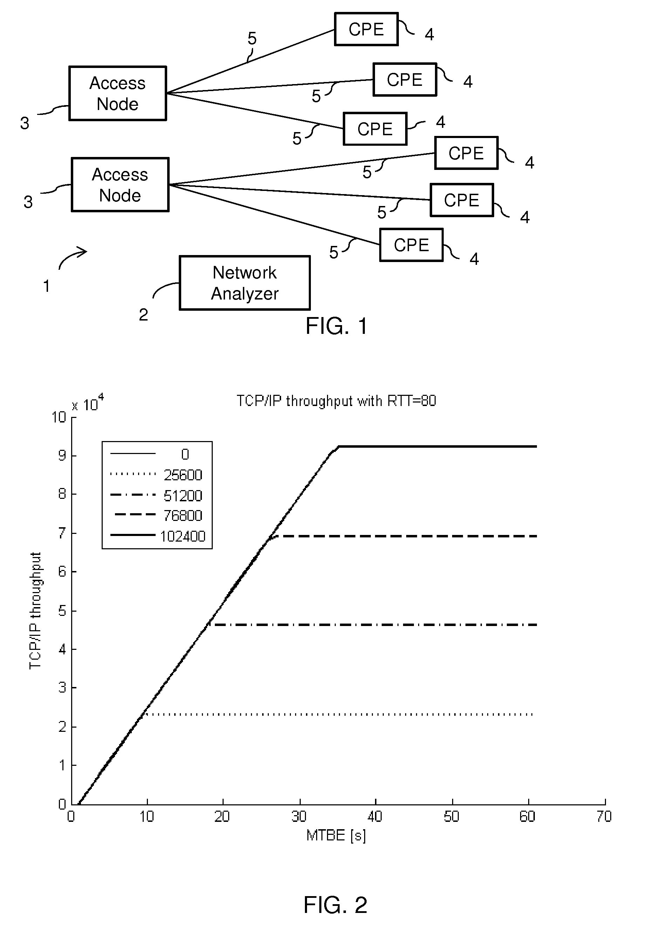

**Figure 1** is a partial view of telecommunication network 1. The telecommunication network 1 comprises a control device 2, a plurality of access nodes 3, a plurality of customer premises equipments 4 and a plurality of Digital Subscriber Lines 5 (DSL) connecting respective customer premises equipments 4 to one of the access nodes 3.

An access node 3 and a customer premises equipment 4 use a DSL technology for communication over a Digital Subscriber Line 5. For example, the access node 3 is or comprises a DSLAM and the customer premises equipment 4 is or comprises a user's DSL modem. A Digital Subscriber Line 5 comprises at least one pair of electrically conductive wires.

The control device 2 is capable of communicating with the access nodes 3 and/or the customer premises equipment 4. In particular, the control device 2 may obtain, from an access node 3 and/or a customer premises equipment 4, data related to the functioning of the Digital Subscriber Line 5. For example, an access node 3 and/or a customer premises equipment 4 regularly reports operational parameters to the control device 2 and/or sends such parameters in response to a request from the control device 2. The control device 2 may also sends commands to an access node 3 and/or a customer premises equipment 4 for configuring the functioning of the Digital Subscriber Line 5. For example, control device 2 may control the noise margin, latency, bitrate... of the Digital Subscriber Line 5.

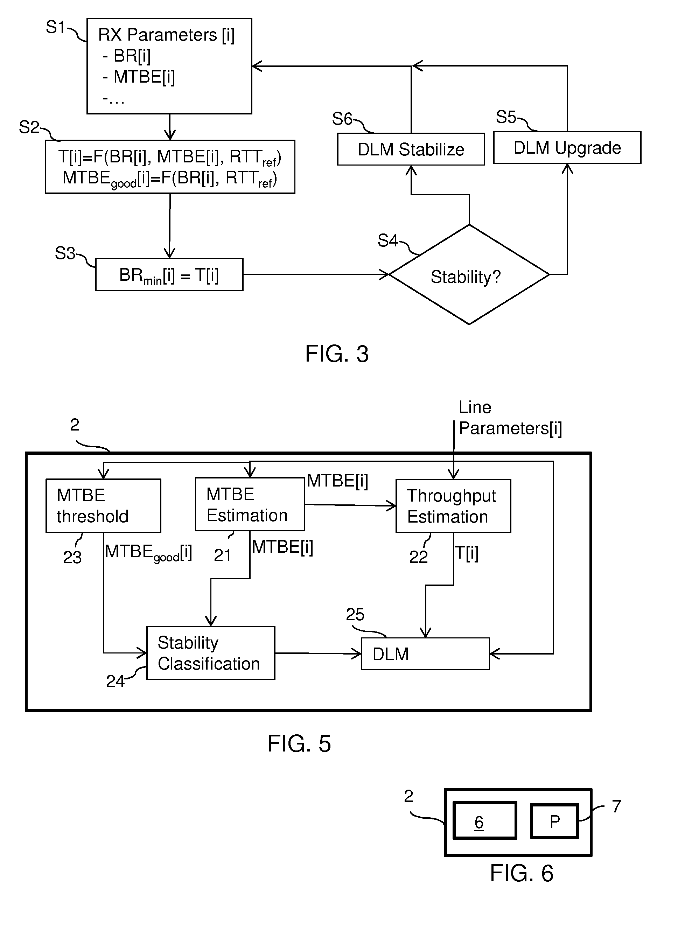

The control device 2 executes a Dynamic Line Management (DLM) function on at least some of the Digital Subscriber Lines 5. This include assessing the stability of a Digital Subscriber Line 5 and taking actions directly on the access node 3 or the customer premises equipment 4 depending on the determined stability, as described in more details hereafter with reference to Figure 3.

The control device 2 may be a network analyzer which, in addition to the Dynamic Line Management function mentioned before, executes other monitoring and/or troubleshooting tasks related to the access nodes 3, the customer premises equipments 4 and the Digital Subscriber Lines 5.

The control device 2 uses performance indicators related to issues rate on the Digital Subscriber Lines 5. Various performance indicators may be used by the control device 2, for example:

- the Mean Time Between Errors (MTBE), representative of the mean time that a line has to wait before its PHY service is being degraded by corrupted symbols, i.e. by PHY symbols containing impacting errors, for example because of impulse noise,
- the Mean Time Between Resynchronization (MTBR), related to the mean time before the modems resynchronize spontaneously because of weak quality of the link, and
- the Mean Time Between Drop of throughput (MTBD).

The MTBE and MTBR may be determined as follows:

$$ErrorEvents(T) = \omega_1 CV(T) + \omega_2 ES(T) + \omega_3 SES(T)$$

$$MTBE = \frac{showtime(T)}{ErrorEvents(T)}$$

$$MTBR = \frac{showtime(T)}{Resynchronization(T)}$$

where T is a time window during which the data, such as the amount of Code Violation (CV), the Errored Seconds (ES), the Severly Errored Seconds (SES), the amount of showtime or the amount of spontaneous resynchronizations are monitored. When a signal is corrupted, a Code Violation is reported. ES is the number of seconds during which one or more non-remedial errors have occurred. SES is the number of times when a given number of consecutive Errored Seconds has been measured. Notice also that these MTBE and MTBR can be split between the two Downstream and Upstream directions but can also be merged (for example by a union/sum/mean of the two metrics). The weights $\omega_1$, $\omega_2$ and $\omega_3$ may have predefined values depending on the application, for example with [w1 w2 w3] = [1 0 0] in the case of high speed Internet service or with [w1 w2 w3] = [0 1 18] in the case of IPTV. Other techniques may be used for determining the MTBE and/or the MTBR, such as weighting the number of errors in function of the usage of the Digital Subscriber Line 5.

The control device 2 may obtain the performance indicators (MTBE, MTBR, MTBR...) by receiving measurement data (CV, ES, SES, number of resynchronizations, amount of showtime, LEFTRS, minEFTR...) from the access node 3 and/or the customer premises equipment 4 and determining the performance indicators in function of the received data. The control device 2 may also receive the performance indicators from the access node 3 and/or the customer premises equipment 4.

Other performance indicators may be used, for example the Bit Error Rate (BER) which is the inverse of the MTBE.

The control device 2 determines the stability of the Digital Subscriber Line 5 in function of the performance indicators. The stability may have for example three possible values: A stable or good state, a risky or intermediate state, and an unstable or degraded state. For example, the stability may be determined by comparing the MTBE and MTBR with thresholds $\Theta_s$, $\Theta_u$, $\Gamma_s$, $\Gamma_u$ as follows:

$$STABLE: \quad MTBE > \Theta_s \text{ and } MTBR > \Gamma_s$$

$$RISKY: \quad \Theta_s > MTBE > \Theta_u \ or \ \Gamma_s > MTBR > \Gamma_u$$

$$UNSTABLE: \quad MTBE < \Theta_u \ or \ MTBR < \Gamma_u$$

When using other performance indicators such as BER and/or MTBD, corresponding thresholds and stability classification rules are used.

The Dynamic Line Management executed by the control device 2 comprises controlling the functioning of the Digital Subscriber Line 5 in function of the determined stability. This may include for example reconfiguring the Digital Subscriber Line 5 to a higher bitrate when the determined stability is STABLE, and increasing the latency (thereby improving the impulse noise protection) and/or the noise margin of the Digital Subscriber Line 5 when the determined stability is RISKY or UNSTABLE.

**Figure 2** is a graph illustrating the relationship between the TCP-IP throughput and the MTBE on a Digital Subscriber Line 5.

From TCP/IP theory, there exists a relationship between BER (bit error rate) and throughput, as corrupted packets need to be retransmitted, consuming therefore some bandwidth and even producing congestion. This relationship takes also into account the packet size defined through the TCP protocol, but also the Round-Trip-Time (RTT) of such packets (the time it takes to retransmit the packet from the server to the client). When the BER is expressed in terms of MTBE, the relationship is formalized as follows:

$$Rca = \frac{12 \cdot MSS \cdot MTBE}{RTT^2}$$

$$Rmax = \min \left( Roh\_efm, Rca \right)$$

wherein:

- Rca is the maximum throughput allowed by the collision avoidance (CA) mechanism of the TCP protocol,
- MSS is the maximum-segment-size of the TCP segment,
- Roh_efm is the EFM rate (Ethernet in the first mile) with overhead (This can be interpreted as the physical-layer rate at which the modems synchronize. Theoretically, this is the maximum rate at which the data can be transported under this synchronization conditions), and
- Rmax is the maximum TCP-IP throughput on the Digital Subscriber Line 5.

The graph of Figure 2 shows the values of Rmax in function of MTBE for RTT=80ms and MSS=1460 bytes (a common value), for various DSL bitrates. This graph shows that the throughput depends on the DSL bitrate and the MTBE. For a given DSL bitrate R:

- If $MTBE \geq \frac{R \cdot RTT^2}{12 \cdot MSS}$, then the maximum throughput is limited by Rof_efm, and does not increase with a higher MTBE.

- If $MTBE < \frac{R \cdot RTT^2}{12 \cdot MSS}$, then the maximum throughput is limited by Rca and decreases with a lower MTBE.

**Figure 3** is a flowchart of a method for controlling a Digital Subscriber Line 5, executed by the control device 2.

The control device 2 obtains line parameters Parameters[i] for a Digital Subscriber Line 5 (Step S1). The line parameters Parameters[i] include at least the actual physical layer bitrate BR[i] of the Digital Subscriber Lines 5 and one or more performance indicators, the Mean Time Between Errors MTBE[i] and Mean Time Between Resynchronizations MTBR[i] in this example. The line parameters Parameters[i] may also include for example the actual noise margin, the actual INP level...

Then, the control device 2 determines a transport layer throughput T[i] and a performance threshold $MTBE_{good}[i]$ for the Digital Subscriber Line 5 (Step S2). As explained with reference to Figure 2, the transport layer throughput T[i] may be determined in function of the physical layer bitrate BR[i] and the MTBE[i], and the performance threshold MTBE$_{good}$[i] may be determined in function of the physical layer bitrate BR[i]. For example, the transport layer throughput T[i] and the performance threshold MTBE$_{good}$[i] are determined based on the relationship between throughput, MTBE, RTT and MSS discussed with reference to Figure 2:

$$T[i] \ = \ \min \left( Roh_{efm}, \frac{12 \cdot MSS_{ref} \ MTBE[i]}{\left( RTT_{ref} \right)^2} \right)$$

$$MTBEgood[i] \ = \ \frac{BR[i] \cdot (RTT_{ref})^2}{12 \cdot MSS_{ref}}$$

where:

- $RTT_{ref}$ is a reference Round-Trip Time value for the Digital Subscriber Line 5, which may be measured or retrieved from a database. This database can have been populated based on expert knowledge, previous field measurements and/or through regular measurements. For example, the reference Round-Trip Time may be measured by pinging a set of representative servers from the Digital Subscriber Line 5 and/or a group of similar Digital Subscriber Lines 5, and by selecting a best value, a mean value or a worst value.
- $MSS_{ref}$ is a reference value for the maximum-segment-size of the TCP segment. For example, it is the predetermined value 1460 bytes.

Then, the control device 2 determines a minimum physical layer bitrate BR$_{min}$[i] for the Digital Subscriber Line 5 (Step S3). More specifically, the minimum physical layer bitrate BR$_{min}$[i] is set equal to the determined transport layer throughput T[i].

Then, the control device 2 performs Dynamic Line Management on the Digital Subscriber Line 5, while taking into account the determined minimum physical layer bitrate BR$_{min}$[i] and performance threshold MTBE$_{good}$[i].

Accordingly, the control device 2 determines the stability of the Digital Subscriber Line 5 (Step S4). This includes comparing MTBE[i] with MTBE$_{good}$[i]. In addition, as explained previously, other thresholds and comparisons may be used for determining the stability, for example by taking the MTBR and/or MTBD into account.

Then, depending on the determined stability, the control device 2 determines control parameters and controls the access node 3 and/or the customer premises equipment 4 associated with the Digital Subscriber Line 5 in function of the determined control parameters. The control parameters may include new values for the minimum and maximum bitrates, noise margins, INP level, G.INP protection mechanisms...

More specifically, in this example, if the Digital Subscriber Line 5 is stable (MTBE[i] > MTBE$_{good}$[i]), then the control device 2 upgrades the Digital Subscriber Line 5 by decreasing a noise margin and/or INP level and/or G.INP protection and/or by increasing a maximum bitrate of the Digital Subscriber Line 5 (Step S5). In contrast, if the Digital Subscriber Line 5 is not stable (MTBE[i] < MTBE$_{good}$[i]), then the control device 2 stabilizes the Digital Subscriber Line 5 by increasing a noise margin and/or INP level and/or G.INP protection and/or by decreasing a maximum bitrate of the Digital Subscriber Line 5 (Step S6). Here, the decreased maximum bitrate is equal to or greater than the minimum physical layer bitrate BR$_{min}$[i] determined at step S3.

The steps S1 to S6 are repeated iteratively, for example every day or every 15 minutes. The counter i is used to identify the successive values of the respective parameters.

In the method of Figure 3, the performance threshold MTBE$_{good}$[i] is determined in function of physical layer bitrate BR[i]. Accordingly, it is not necessary to specify the performance threshold MTBE$_{good}$[i] in function of expert knowledge and/or customer service data. No configuration is required.

Moreover, by setting the minimum physical layer bitrate BR$_{min}$[i] equal to the determined transport layer throughput T[i], even if the Dynamic Line Management function of the control device 2 reduce the bitrate of an unstable line, the transport layer throughput is not reduced. Accordingly, the user of the Digital Subscriber Line 5 does not notice transient performance decreases during the Dynamic Line Management.

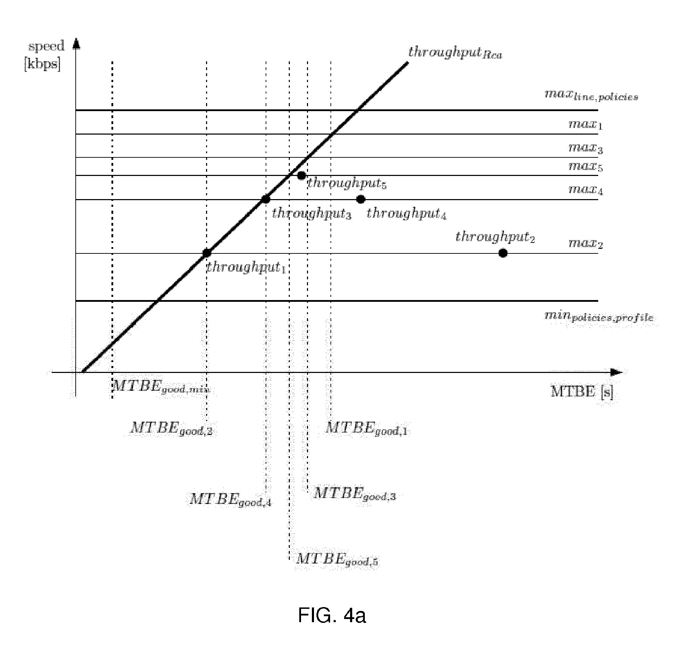

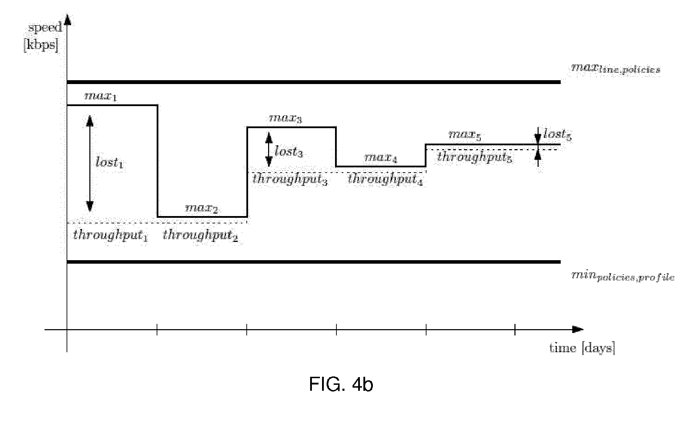

This is illustrated, for an example, on **Figure 4,** wherein the upper part is a graph showing the relationship between transport layer throughput and MTBE and successive functioning points, and the lower part is a graph showing transport layer throughput in function of time.

In this example, initially, the Digital Subscriber Line 5 is configured to operate at a relatively high maximum bitrate (max1), in accordance with the bitrate DLM policies (i.e. within the min and max allowed by both the physics of the line, and the DLM policies). Let's assume that the line is actually configured a bit too high, such that it is affected by too many transmission errors (low MTBE) and therefore the effective throughput at transport layer level (TCP/IP throughput) is affected and hence, lower than the PHY layer rate. This initial state of the line is represented in Fig. 4, by the point throughput1.

Let's assume also that all usual Impulse Noise Protection (INP) mechanisms (such as IFEC, G.INP, ...) have already been applied to try mitigating the errors, but are not sufficient. The only remaining solution is then to reduce the DSL PHY bitrate, in order to increase the noise margin.

The MTBE threshold below which this PHY bitrate reduction should occur is shown in Fig. 4 as $MTBE_{good1}$. Down to this MTBE, the TCP rate corresponds to the PHY rate max1. Below this MTBE, the effective TCP rate will decrease, down to throughput1, for instance.

So, as the actual MTBE is lower than the threshold, DLM will trigger a stabilization action, consisting in reducing the PHY layer bitrate. In order to converge as quickly as possible, while avoiding any transient user bitrate drop, the PHY bitrate will be limited to the current TCP bitrate. In other words, the new PHY rate max2 will be set equal to throughput1.

After reconfiguration, the new line state is now represented by the point throughput2, which exhibits exactly the same TCP rate as the initial configuration. However, as the PHY rate has been decreased, and hence the noise margin was increased, the error transmission rate has also decreased, and so, the MTBE is now higher.

With this new PHY rate, the MTBE threshold below which TCP rate will decrease now corresponds to $MTBE_{good2}$.

As the actual MTBE is much higher than this threshold, DLM now assumes the line is perfectly stable and that there is room to increase the bitrate. A typical DLM will then increase the PHY bitrate somewhere in between the current level, corresponding to a stable configuration, and the previous level, corresponding to unstable conditions.

Let's assume that the new PHY bitrate is configured at max3, with a corresponding MTBE threshold noted $MTBE_{good3}$.

If this rate is again too high (this is the case illustrated in Fig. 4), the new actual MTBE is below the threshold, and the TCP throughput is again limited (point throughput3). Then the process can be repeated again as in the initial situation. I.e. the PHY bitrate will be reduced to level of the actual TCP rate, and this new configuration corresponds to the point throughput4, with a better MTBE. The line is now stable again, and a new PHY bitrate can be tried, somewhere between max2 and max3.

Usually, DLM system configuration comprises a granularity setting for each reconfigurable line parameter, i.e. the minimum step that the DLM is allowed to use when reconfiguring a line. The process described here above will then continue as long as the difference between the PHY bitrates corresponding to two successive configurations (max_i, and max_i+1) is higher than the allowed bitrate granularity. When it is not the case anymore, the process stops and the line has achieved optimal configuration.

It is worth noting that during the whole process, the end-user bitrate has never decreased and actually, by design, can only globally increase (throughput5 > throughput3,4 > throughput1,2 ).

By this example, the proposed iterative method has been illustrated.

However, to be complete, an extra threshold, for instance $MTBE_{good,min}$, can also be defined, in order to prevent DLM from configuring the line in a state that would not meet a minimum service quality.

In a case were a line could not achieve this minimum service quality, it could get reported as impaired, hence warning the operator that the required minimum quality of service cannot be achieved.

The control device 2 may execute the control method for a plurality of Digital Subscriber Lines 5 in parallel. Accordingly, the performance threshold $MTBE_{good}[i]$ and the minimum physical layer bitrate $BR_{min}[i]$ may be set individually for respective Digital Subscriber Lines 5. In comparison to the use of a common value for a group of Digital Subscriber Lines 5, for example a mean value, this allows controlling each Digital Subscriber Lines 5 at its highest stable throughput.

**Figure 5** is a functional view of the control device 2, in an example implementation. The control device 2 comprises a MTBE estimation module 21, a transport layer throughput estimation module 22, a MTBE threshold determination module 23, a stability classification module 24 and a Dynamic Line Management module 25.

The MTBE estimation module 21 determines MTBE[i] in function of the received line parameters. As discussed previously, the MTBE estimation module 21 may determine MTBE[i] in function of measurement data (CV, ES, SES, number of resynchronizations, amount of ShowTime...) included in the line parameters, or the line parameters may include MTBE[i].

The transport layer throughput estimation module 22 determines the transport layer throughput T[i] in function of the physical layer bitrate BR[i] and MTBE[i], taking into account the model discussed with reference to Figure 2.

The MTBE threshold determination module 23 determines $MTBE_{good}[i]$ in function of the physical layer bitrate BR[i], taking into account the model discussed with reference to Figure 2.

The stability classification module 24 determines the stability of the Digital Subscriber Line 5. This comprises comparing performances indicators (MTBE[i], MTBR) with thresholds ($\Theta_s$, $\Theta_u$, $\Gamma_s$, $\Gamma_u$) as discussed previously. Here, the value $MTBE_{good}[i]$ determined by MTBE threshold determination module 23 is used as threshold $\Theta_s$.

The Dynamic Line Management module 25 determines control parameters for the Digital Subscriber Line 5, in function of the determined stability. The Dynamic Line Management module 25 applies a control policy which specifies a minimum physical layer bitrate and a maximum physical layer bitrate between which the Dynamic Line Management module 25 is allowed to control the Digital Subscriber Line 5. Here, the transport layer throughput T[i] determined by the transport layer throughput estimation module 22 is used in the control policy as the minimum physical layer bitrate BR[i].

The Dynamic Line Management module 25 uses as inputs the stability determined by the stability classification module 24, a control policy including a minimum physical layer bitrate, and (some of) the lines parameters. Accordingly, in the control device 2, the Dynamic Line Management module 25 may be implemented in the same manner as in a case wherein the MTBE threshold and the minimum physical layer bitrate are set for example based on expert knowledge. In other words, the use of the MTBE estimation module 21, the transport layer throughput estimation module 22, the MTBE threshold determination module 23, and the stability classification module 24 does not requires adaptations to the Dynamic Line Management module 25 in comparison with known Dynamic Line Management modules.

**Figure 6** is a structural view of the control device 2, which comprises a processor 6 and a memory 7. The memory 7 stores a computer program P which, when executed by the processor 6, cause the control device 2 to execute method described above with reference to Figure 3.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

**Claims**

1. Method for controlling a Digital Subscriber Line (5), executed by a control device (2), comprising repeating the following steps:

   - obtaining (S1) a performance indicator (MTBE[i]) representative of an issue rate on said Digital Subscriber Line (5) and a physical layer bitrate (BR[i]) of said Digital Subscriber Line (5),
   - determining (S2) a transport layer throughput (T[i]) of said Digital Subscriber Line (5) in function of said performance indicator and said physical layer bitrate,
   - determining (S2) a performance threshold ($MTBE_{good}[i]$) for said Digital Subscriber Line (5) in function of said physical layer bitrate,
   - determining configuration parameters for the Digital Subscriber Line by, depending of a comparison of the performance indicator and the performance threshold:

     - decreasing (S6) a noise margin and/or INP level and/or G.INP protection and/or increasing a maximum bitrate of the Digital Subscriber line, or
     - increasing (S5) the noise margin and/or INP level and/or G.INP protection and/or decreasing the maximum bitrate of the Digital Subscriber line, wherein the decreased maximum bitrate is equal to or greater than the transport layer throughput,

   - controlling the Digital Subscriber Line in function of determined configuration parameters.

2. Method according to claim 1, wherein said performance indicator is a Mean Time Between Error, determined in function of at least one of an amount of Code Violation, of Errored Seconds and of Severly Errored Seconds.

3. Method according to one of claims 1 and 2, comprising determining (S4) a stability of said Digital Subscriber Line in function of at least said performance indicator and said performance threshold, wherein determining the stability comprises determining that the stability has one of a first value representative of a stable or good state, a second value representative of a risky or intermediate state, and a third value representative of an unstable or degraded state.

4. Method according to one of claims 1 to 3, comprising repeating said steps until a difference between an actual physical layer bitrate and the increased maximum physical layer bitrate is lower than a granularity threshold.

5. Method according to one of claims 1 to 4, comprising determining a reference Round Trip Time associated with said Digital Subscriber Line, wherein said transport layer throughput and said performance threshold are determined in function of said reference Round Trip Time.

6. Method for controlling a plurality of Digital Subscriber Lines, executed by a control device, comprising executing the method of one of claims 1 to 5 individually for the respective Digital Subscriber Lines.

7. Computer program (P) comprising instructions for performing the method of one of claims 1 to 6 when said instructions are executed by a computer.

8. Control device (2) for controlling a Digital Subscriber Line (5), comprising means (6, 7, P) for repeating the following steps:

- obtaining (S) a performance indicator (MTBE[i]) representative of an issue rate on said Digital Subscriber Line (5) and a physical layer bitrate (BR[i]) of said Digital Subscriber Line (5),
- determining (S2) a transport layer throughput (T[i]) of said Digital Subscriber Line (5) in function of said performance indicator and said physical layer bitrate,
- determining (S2) a performance threshold ($MTBE_{good}$[i]) for said Digital Subscriber Line (5) in function of said physical layer bitrate,
- determining configuration parameters for the Digital Subscriber Line by, depending of a comparison of the performance indicator and the performance threshold:

- decreasing (S6) a noise margin and/or INP level and/or increasing a maximum bitrate of the Digital Subscriber line, or
- increasing (S5) the noise margin and/or INP level and/or decreasing the maximum bitrate of the Digital Subscriber line, wherein the decreased maximum bitrate is equal to or greater than the transport layer throughput,

- controlling the Digital Subscriber Line in function of determined configuration parameters.

9. Telecommunication network comprising a control device according to claim 8.

**Amended claims in accordance with Rule 137(2) EPC.**

1. Method for controlling a Digital Subscriber Line (5), executed by a control device (2), comprising repeating the following steps:

- obtaining (S1) a performance indicator (MTBE[i]) representative of an issue rate on said Digital Subscriber Line (5) and a physical layer bitrate (BR[i]) of said Digital Subscriber Line (5),
- determining (S2) a performance threshold ($MTBE_{good}$[i]) for said Digital Subscriber Line (5) in function of said physical layer bitrate,
- determining (S4) a stability of said Digital Subscriber Line in function of at least said performance indicator and said performance threshold, wherein determining the stability comprises determining that the stability has one of a first value representative of a stable or good state, a second value representative of a risky or intermediate state, and a third value representative of an unstable or degraded state,

**characterized in that** it comprises:

- determining (S2) a transport layer throughput (T[i]) of said Digital Subscriber Line (5) in function of said performance indicator and said physical layer bitrate,
- determining configuration parameters for the Digital Subscriber Line by:

  - if the Digital Subscriber Line is stable, decreasing (S5) a noise margin and/or Impulse Noise Protection level and/or increasing a maximum bitrate of the Digital Subscriber line,
  - if the Digital Subscriber Line is not stable, decreasing (S6) the maximum bitrate of the Digital Subscriber line, wherein the decreased maximum bitrate is equal to or greater than the transport layer throughput,
  - controlling the Digital Subscriber Line in function of determined configuration parameters.

2. Method according to claim 1, wherein said performance indicator is a Mean Time Between Error, determined in function of at least one of an amount of Code Violation, of Errored Seconds and of Severly Errored Seconds.

3. Method according to one of claims 1 to 2, comprising repeating said steps until a difference between an actual physical layer bitrate and the increased maximum physical layer bitrate is lower than a granularity threshold.

4. Method according to one of claims 1 to 3, comprising determining a reference Round Trip Time associated with said Digital Subscriber Line, wherein said transport layer throughput and said performance threshold are determined in function of said reference Round Trip Time.

5. Method for controlling a plurality of Digital Subscriber Lines, executed by a control device, comprising executing the method of one of claims 1 to 4 individually for the respective Digital Subscriber Lines.

6. Computer program (P) comprising instructions for performing the method of one of claims 1 to 5 when said instructions are executed by a computer.

7. Control device (2) for controlling a Digital Subscriber Line (5), comprising means (6, 7, P) for repeating the following steps:

   - obtaining (S1) a performance indicator (MTBE[i]) representative of an issue rate on said Digital Subscriber Line (5) and a physical layer bitrate (BR[i]) of said Digital Subscriber Line (5),
   - determining (S2) a performance threshold ($MTBE_{good}$[i]) for said Digital Subscriber Line (5) in function of said physical layer bitrate,
   - determining (S4) a stability of said Digital Subscriber Line in function of at least said performance indicator and said performance threshold, wherein determining the stability comprises determining that the stability has one of a first value representative of a stable or good state, a second value representative of a risky or intermediate state, and a third value representative of an unstable or degraded state,

   **characterized in that** said means (6, 7, P) are configured for:

   - determining (S2) a transport layer throughput (T[i]) of said Digital Subscriber Line (5) in function of said performance indicator and said physical layer bitrate,
   - determining configuration parameters for the Digital Subscriber Line by:

     - if the Digital Subscriber Line is stable, decreasing (S5) a noise margin and/or Impulse Noise Protection level and/or increasing a maximum bitrate of the Digital Subscriber line,
     - if the Digital Subscriber Line is not stable, decreasing (S6) the maximum bitrate of the Digital Subscriber line, wherein the decreased maximum bitrate is equal to or greater than the transport layer throughput,

   - controlling the Digital Subscriber Line in function of determined configuration parameters.

8. Telecommunication network comprising a control device according to claim 7.

FIG. 1

FIG. 2

S1 — RX Parameters [i]
- BR[i]
- MTBE[i]
-...

S2 — $T[i]=F(BR[i], MTBE[i], RTT_{ref})$
$MTBE_{good}[i]=F(BR[i], RTT_{ref})$

S3 — $BR_{min}[i] = T[i]$

S4 — Stability?

S6 — DLM Stabilize

S5 — DLM Upgrade

**FIG. 3**

Line Parameters[i]

2

MTBE threshold

MTBE Estimation $\quad$ MTBE[i]

Throughput Estimation

23 $\quad$ $MTBE_{good}[i]$

21 $\quad$ MTBE[i]

22 $\quad$ T[i]

25

Stability Classification

DLM

24

**FIG. 5**

2 — 6 $\quad$ P — 7

**FIG. 6**

FIG. 4a

FIG. 4b

Europäisches
Patentamt

European
Patent Office

Office européen
des brevets

# EUROPEAN SEARCH REPORT

Application Number

EP 15 30 6724

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 797 249 A1 (ALCATEL LUCENT [FR]) 29 October 2014 (2014-10-29) * paragraph [0010] - paragraph [0012] * * paragraph [0002] - paragraph [0005] * * paragraph [0037] - paragraph [0042] * * paragraph [0046] - paragraph [0050] * * paragraph [0070] * ----- | 1-9 | INV. H04L5/14 H04L12/24 H04L1/00 H04L1/20 H04L27/26 H04L12/801 |
| X | EP 2 806 594 A1 (ALCATEL LUCENT [FR]) 26 November 2014 (2014-11-26) * paragraph [0006] - paragraph [0009] * * paragraph [0039] - paragraph [0044] * * paragraph [0062] - paragraph [0065] * ----- | 1-9 | |
| X | EP 2 107 734 A1 (BRITISH TELECOMM [GB]) 7 October 2009 (2009-10-07) * paragraph [0006] - paragraph [0009] * * paragraph [0031] - paragraph [0035] * * paragraph [0042] - paragraph [0044] * ----- | 1-9 | TECHNICAL FIELDS SEARCHED (IPC) H04L |

The present search report has been drawn up for all claims

| Place of search | Date of completion of the search | Examiner |
|---|---|---|
| The Hague | 1 April 2016 | Anghel, Paul |

EPO FORM 1503 03.82 (P04C01)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

## ANNEX TO THE EUROPEAN SEARCH REPORT
## ON EUROPEAN PATENT APPLICATION NO.

EP 15 30 6724

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2016

| Patent document cited in search report | | Publication date | Patent family member(s) | | Publication date |
|---|---|---|---|---|---|
| EP 2797249 | A1 | 29-10-2014 | NONE | | |
| EP 2806594 | A1 | 26-11-2014 | EP | 2806594 A1 | 26-11-2014 |
| | | | WO | 2014187609 A1 | 27-11-2014 |
| EP 2107734 | A1 | 07-10-2009 | CN | 101981875 A | 23-02-2011 |
| | | | EP | 2107734 A1 | 07-10-2009 |
| | | | EP | 2260617 A1 | 15-12-2010 |
| | | | US | 2011019575 A1 | 27-01-2011 |
| | | | WO | 2009122154 A1 | 08-10-2009 |

EPO FORM P0459

For more details about this annex : see Official Journal of the European Patent Office, No. 12/82